# EUROPEAN PATENT APPLICATION

(11) **EP 2 835 058 A1**
(43) Date of publication of application: **11.02.2015**
(21) Application number: 14179883.5
(22) Date of filing: 05.08.2014
(51) Int. Cl.: A23J 1/04, A23J 1/12, A23J 1/14, A23J 3/18, A23J 3/22, A23L 1/03, A23L 1/105, A23L 1/20, A23L 1/212

(54) **Meat substitute composition and method for providing thereof**

(30) Priority: 07.08.2013 NL 2011277
(71) Applicant: Stichting Eco Consult, 4103 VB Culemborg (NL)
(72) Inventor: Oei, Peter Theodor Hay Ham, 4103 VB Culemborg (NL)
(74) Representative: van Kooij, Adriaan

(57) **Abstract**

The present invention relates to a method for the production of a meat substitute composition based on solid state fermentation, wherein the method comprises the steps of:(i)providing a substrate having a moisture content of above 50 % (w/w) comprising two different ingredients each having a different texture;(ii)introducing to said substrate an edible mushroom mycelium; and (iii)allowing said mycelium to grow in said substrate for a period which is sufficient to saturate the substrate with mycelium to provide the meat substitute composition.

## Description

The present invention relates to a method for the production of a meat substitute composition based on solid state fermentation. According to another aspect, the present invention relates to a meat substitute composition, as well as to the use thereof.

Vegetarian food is gaining acceptance due to health concerns and environmental issues related with the production of meat. For example, with the production of beef meat large agricultural areas are involved in order to provide sufficient feed for the animals.

Within the vegetarian food sector there are relatively few meat substitutes which aim to provide the proteins which are recommended for daily intake as well as having an appealing texture. Examples of known meat substitutes are tofu, tempeh and mycoproteins known under the name Quorn.

The mycoprotein from corn which is used in Quorn is refined from *Fusarium venenatum.* The fungus is grown in continually oxygenated water in large fermentation tanks: so called liquid fermentation. The mycoprotein derived is washed and further texturized by using a binder in order to provide a meat like texture. The process involved to provide a palatable product requires considerable inputs in the form of energy and materials and is thus not efficient.

Tofu is produced by using soybean derived proteins in a relatively simple and efficient process. However, tofu lacks taste and texture.

Tempeh is also produced by soybeans. More specifically, soybeans are dehulled and cooked. Then the soybeans are mixed with spores of the fungus *Rhizopus oligosporus* and the mixture is allowed to ferment in order to knit the soybeans by the grown mycelium. Disadvantages of tempeh are that it lacks taste and texture. Specifically, the texture of tempeh is not firm enough to closely resemble the texture of meat and the choice for the Rhizopus fungus (a non mushroom producing lower fungus) leads to an unpleasant bitter taste.

In view of the above there is a need in the art for the provision of a meat substitute composition by an efficient process. Further, there is a need in the art for the provision of a meat substitute having a texture which is meat like, comprises essential amino acids and provides a desired taste profile.

Therefore, the object of the present invention is to provide a method for the cost effective production of a meat substitute composition, as well as to provide a meat substitute composition.

This object is met by providing a method according to the appended clause 1.

Specifically, this object is met by providing a method for the production of a meat substitute composition, or meat alternative composition, based on solid state fermentation, wherein the method comprises the steps of:
(i) providing a substrate having a moisture content of above 50 % (w/w) comprising two different ingredients each having a different texture;
(ii) inoculating or introducing to said substrate an edible mushroom mycelium; and
(iii) allowing said mycelium to grow in said substrate for a period which is sufficient to saturate or colonize the substrate with mycelium to provide the meat substitute composition.

By using the present method, it becomes possible to produce a meat substitute having a texture that is meat like with regard to the firmness. Further, the present method provides more than 3 or even 4 kilo meat substitute by using only 1 kilo substrate materials like cereals as input.

The term solid state fermentation as used in the present context means fermentation under controlled circumstances with solid nutrients, as opposed to liquid fermentation which takes place in an oxygenated broth in large vessels. Preferably, the moisture content of the present substrate, or matrix, which is above 50 weight %, such as from 55 to 80 wt %.

The advantage of Solid State Fermentation in this invention is that it produces a food product that doesn't need processing: the fully grown substrate can be sold as such, or cut in slices and sold in separate packages. There is no need for refining the fibers and extruding them to obtain a reasonable texture.

Solid State Fermentation can be performed with a large number of organic substances. The digestibility of material (which is partly broken down by the extra cellular enzymes of the mycelium) increases. Only white rot basidiomycetes are capable to degrade the complex lignocellulose complex, which is abundant in many plant materials. Thus more nutrients can be derived from the substrate ingredient, as the non digestive complexes like lignin are broken down. Many white rot basidiomycetes form fruiting bodies with excellent culinary qualities. Solid State Fermentation is thus widely used in the mushroom cultivation sector: mushrooms will grow out of the colonized substrate. The present invention however is not directed at the fruiting bodies, but at using the substrate as such. In this way the efficiency of the process is multiplied with a factor three to four. From 100 kg of Solid State Fermented compost ca. 33 kg of White button mushrooms can be harvested, in the case of shiitake on a sawdust / corn based substrate ca. 25 kg. However, if the complete substrate is used for food (as proposed in the present invention), the harvest is 100 kg. The conversion rate is thus much better and requires less material and labor.

In contrast to liquid fermentation, with Solid State fermentation there is no need for expensive soluble nutrients. Materials with low value (like apple or Asparagus peelings) can thus be upgraded to a valuable food product.

An edible mushroom mycelium as used in the present context means a fungal mycelium belonging to fungal types bearing fruit bodies which are commonly regarded as edible for humans. Preferably, the present edible mushroom is chosen from the group consisting of *Agaricus bisporus, A. bitorquis, A. blazei, Auricudaria polytricha, Auricudaria (Hirneola) auricula-judae, Grifoda frondosa, Cordyceps sinensis, C. japonica, Flammulina velutipes, Hypsizygus tessulatus, H. marmoreus, Lentinula edodes, Morchella esculenta, Pleurotus cornucopiae, P. eryngii, P. ostreatus, P. nebrodensis, P. citrinopileatus, Sparassis crispa, Tremella fuciformis, Tuber aestivum, T. magnatum, T. medanosporum, Terfezia sp., Ustilago maylis,* and *Volvariella volvacea.* More preferably, the present mushroom *Pleurotus eryngii, P. nebrodensis* or *P. citrinopileatus* because these mycelia provide a particular firm mycelium through the present substrate, therewith providing a meat substitute composition having an increased firmness.

According to a preferred embodiment the present step (i) comprises providing a substrate having a moisture content of above 50 % (w/w) comprising a cereal and a plant derived product, preferably in a weight ratio of more than 3:1.

According to a preferred embodiment the present plant derived product comprises an edible shell of fruits, peas and/or beans. The inclusion of the edible shell provides a firm texture to the meat substitute composition. An edible shell or hull, as used in the present context includes skins and peels. For example the peels and skins of the plant product fruits and vegetables. Preferably, the present ratio of cereal to shell is from 3:1 to 9:1.

Alternatively, the present substrate comprises seaweed such as nori or kelp, algae and/or fish residues. An advantageous texture providing material is shrimp waste, and especially shrimp shells. Shrimp waste may preferably combined with cereals and/or corn to provide a meat like texture meat substitute having desired nutritional ingredients. An especially advantageous combination of present ingredients is shrimp shells with bulgur, shrimp shells with popcorn, shrimp shells with bulgur and with popcorn, or shrimp shells with maize grits, or shrimp shells with bulgur and with maize grits.

Growing of the present mycelium is preferably done in growing conditions which are favorable for the used mycelium. Different strains each have their own preferences, however, most of the edible mushrooms have good mycelial growth at temperatures in the substrate of 22-27 C, more notably 25 C. It should be noted that the growth of the mycelium itself produces heat, the inner core of substrate may be 5 C hotter compared to the outer part of substrate blocks, which is in equilibrium with the air temperature.

Typically, the present mycelia are allowed to grow in filter bags, which provide sufficient aeration for a time period which is sufficient to saturate the substrate with mycelium. Saturation of the substrate is usually obtained before the moment when fruit setting of the mycelium begins.

Preferably, the present time period is from 10 to 30 days such as from 10 to 14 days. A longer fermentation periods results in a higher production of enzymes and further breakdown of the substrate elements, like lignin, cellulose and hemicellulose, as well as sugars and complex carbohydrates. A riper substrate has a taste profile that differs from a young mycelium.

According to a preferred embodiment, the present method further comprises sterilizing the present substrate before introducing the mycelium, and/or sterilizing the meat substitute composition. Preferably the sterilization is carried out by steam sterilization, gamma radiation, dry heat sterilization or chemical sterilization.

According to yet another preferred embodiment, the present cereal is soaked in water having a temperature of above 70 °C to allow the cereal to bound water. Preferably the cereal are allowed to soak in water before they are mixed with the present shells since the shell then remain there original firmness which is desirable for providing a meat substitute composition having an advantageous texture.

In a preferred embodiment, the present fruit is chosen from the group consisting of apples, oranges, pears, nectarines, peaches, prunes or tomatoes. Using for example the peels from apples provides both a firm texture as well as a desired taste profile.

In another preferred embodiment the present peas or beans are chosen from the group consisting of garden peas, butter beans, soy beans, snap beans, white beans, black beans, Pinto beans, lentils, black eyed peas, cannellini beans, chickpeas, great northern beans, kidney beans and lima beans.

Alternatively, the present substrate further comprises a vegetable chosen from the group consisting of flower buds, leaves, buds, stems, stem shoots, tubers, roots and bulbs. Examples of useful flower buds are cauliflower, broccoli or capers. Advantageous buds which can be used in the present invention are Brussels sprouts. Asparagus is an example of stem shoots which may be used to provide an advantageous texture. An advantageous and starch rich tuber is potato. Onion, shallot and garlic are examples of advantageous bulbs which may be used in the present invention since they provide both a firmness as a taste profile to the meat substitute composition.

According to a preferred embodiment, the present cereal is chosen from the group consisting of bulgur, wheat, maize, rice, barley, sorghum, oats, rye and buckwheat, corn grits, popped corn or combinations thereof such as bulgur and maize or bulgur and wheat. More preferably, the present cereal is a combination of corn grits, popped corn and bulgur.

Preferably, the present mushroom is mycelium *Pleurotus eryngii,* or king oyster mushroom, *P. nebrodensis* or *P. citrinopileatus* because these mycelia provide a particular firm mycelium through the present substrate, therewith providing a meat substitute composition having an increased firmness.

In a further preferred embodiment, the present method comprises adding to the present meat substitute composition an additional ingredient chosen from the group consisting of lipoid, or fat, wooden twigs, wooden sticks, cheese, meat, sliced tomatoes, and flour. The addition of lipids provides for example a texture which is rib eye like, whereas wooden twigs or stick may provide lamb rack or sate like meat substitutes. Further, the addition of cheese and or tomatoes may provide an alternative meat substitute. Also meat may be included in the present meat substitute composition in order to provide a hybrid product.

Given the advantageous properties of the provided meat substitute composition, the present invention relates according to another aspect to a meat substitute composition obtainable by the present method.

According to yet another aspect the present invention relates to a meat substitute composition, or meat alternative composition, comprising mycelium from an edible mushroom grown through a substrate, or which colonizes a substrate, comprising two different ingredients each having a different texture.

Preferably, the present mycelium from an edible mushroom belongs to the genus *Agaricus* or *Pleurotus,* and is more preferably *Pleurotus ostreatus, Grifoda frondosa, Agaricus blazei or Pleurotus eryngii.*

According to a preferred embodiment, the present meat substitute composition comprises mycelium from an edible mushroom grown through a substrate comprising a cereal and plant derived product, preferably in a weight ratio of more than 3:1. Preferably the plant derived product is carrot. An especially advantageous combination of present ingredients is carrot with bulgur, carrot with popcorn, carrot with bulgur and with popcorn, or carrot with maize grits, or carrot with bulgur and with maize grits.

Preferably, the present meat substitute composition comprises plant derived product comprising an edible shell of fruits, peas and/or beans.

A preferred meat substitute according to the invention comprises wheat and apple peelings colonized with *P. eryngii or P. citrinopileatus.* Alternatively, the present meat substitute composition comprises wheat, garden peas colonized with *P. eryngii or P. citrinopleatus.* Further, the present meat substitute composition comprises shrimp residue, kelp and soy beans, colonized with *Hypsizygus marmoreus.* Further, the present meat substitute composition comprises wheat, corn, lotus leaves, colonized with *Agaricus blazei.*

In a preferred embodiment, the present meat substitute comprises *Grifoda frondosa* mycelium grown on a substrate comprising corn grits, popped corn and bulgur.

According to a further preferred embodiment, the present meat substitute composition comprises shrimp shells, barley, maize, and/or popped corn, and *Pleurotus eryngii.* Preferably, the present meat substitute composition comprises shrimp shells, popped corn and mycelium of *Pleurotus eryngii.* Alternatively, the present meat substitute composition comprises barley, popped corn and mycelium of *Pleurotus eryngii.*

According to yet another preferred embodiment, the present meat substitute composition comprises barley, maize, or popped corn and *Pleurotus eryngii.*

According to another aspect, the present invention relates to the use of the present meat substitute composition, for the provision of a consumer product such as a meat hybrid or a vegetarian product, such as a partly vegetarian sausage, schnitzel, steak and chicken, or for the provision of a sausage roll, pasta or stuffed pasta such as ravioli, or for the provision of a croquet.

The invention will be further elucidated in the following examples, showing non limitative embodiments of the present invention.

### Examples

### Example 1 Solid state fermented substitute chicken meat

1 Kilo wheat grain is soaked in hot water (90 C) for 1 hour and mixed with peelings from apples in a ratio of 4 to 1 (wet weight). The mixture is filled in autoclavable filter bags (which allow the mycelium to breathe) in units of 3 kg each and sterilised at 121 C for four hours. After cooling down to 30 C, the bags are cut open and mushroom mycelium of *Pleurotus ostreatus* or *Pleurotus citrinopileatus* is introduced. The mycelium colonises the substrate ingredients within two weeks. The loose substrate ingredients all contain the mushroom mycelium, which connects all the substrate ingredients in the form of a solid block. The texture is comparable to chicken meat, as the apple peelings give a specific bite to the product. Further, the weight of the formed solid block was 3.6 kilo.

### Example 2 Rib eye mushroom

1 Kilo wheat grain is soaked in hot water (90 C) for 1 hour and mixed with garden peas (including their skins) in a ratio of 2 to 1 (wet total weight). The mixture is filled in autoclavable filter bags (which allow the mycelium to breathe) in units of 3 kg each and sterilised at 121 C for four hours. After cooling down to 30 C, the bags are cut open and mushroom mycelium of *Pleurotus ostreatus* or *Pleurotus citrinopileatus* is introduced. The mycelium colonises the substrate ingredients within two weeks. The loose substrate ingredients all contain the mushroom mycelium, which connects all the substrate ingredients in the form of a solid block. A light coloured fat is injected along the middle of the blocks and the block is cut in slices to reveal the Rib Eye Mushroom texture. The weight of the formed solid block was 3.2 kilo.

### Example 3 Hybrid seafood substitute: shrimp nuggets

A substrate is prepared containing crushed shrimp residues, soaked kelp (seaweed) and moistened soy beans in a ratio of 1:1:4 (wet weight). The substrate is filled in heat resistant plastic bags with filters, closed by sealing and sterilized in a dry heating system at 130 C for 24 hours. The bags are cut open in a laminar flow and mycelium of *Hypsizygus marmoreus* is then introduced. The bags are then placed in a special form for the Solid State Fermentation process to obtain a rigid block of mycelium in a specific form. After 3 weeks the mycelium has cemented the loose substrate ingredients together and the plastic is removed. The block is then cut in 1 cm slices and a breadcrumb crust is added. The shrimp nuggets can be deep fried and packaged in consumer quantities.

### Example 4 Almond Mushroom steak

In this specific example, the choice for the specific mycelium is crucial for the taste of the end product. *Agaricus blazei* Murill is being cultivated on compost as a an alternative medicine; moreover its is known for its typical almond flavor. The same flavor is present in the mycelium, too. A substrate is prepared containing wheat sprouts of 8 days old (45%), corn (45%) and lotus leaves (5%). The corn is pre moistened by soaking in hot water for 2 hours, the lotus leaves are used dry. The mixture is filled in Unicorn 4B bags and sterilized at 121 C for 2,5 hours (these relatively small bags contain 1,2 kg of substrate in a more or less cylindrical form and can thus quicker be sterilized than the 3 kg in the examples 1 & 2). After cooling down, the spawn of *Agaricus blazei* is inserted under aseptic conditions with methods known in the industry. The mycelium will colonize the substrate in 2 weeks and releases a very nice specific natural fragrance of almonds. The cylinder formed block of solid mycelium is taken out of the plastic and is cut in slices to provide a consumer meat steak.

### Example 5 Shrimp shells with barley and popped corn

Fresh shrimp shells (30%) were mixed with 35% briefly cooked barley and 35% of moistened popped corn. The mixture was sterilized in an autoclave for 2 hours, left to cool and inoculated with a culture of King Oyster Mushroom (*Pleurotus eryngii*).
After 2 weeks of mycelial running the base product was finished and used for palatability sessions.

### Example 6 Barley and popped corn

50% briefly cooked barley and 50% of moistened popped corn were mixed (volume percentages). The mixture was sterilized in an autoclave for 2 hours, left to cool and inoculated with a culture of King Oyster Mushroom (*Pleurotus eryngii*).
After 2 weeks of mycelial running the base product was finished and used for palatability sessions.

### Example 7 Chicken of the woods: Grifola frondosa

A typical taste is developed by the mycelium of this highly valued mushroom species, while the mushroom itself is relatively difficult to cultivate. It grows well on a mixture of corn grits, popped corn and bulgur.

### Example 8 Palatability

A survey among 11 representatives of food companies was performed with the compositions of example 5 and example 6. Two different types were presented, one with shrimp shells (30%) barley and popcorn (see example 5), and one vegetarian version with pop corn and broken wheat grain (example 6). The samples were prepared by frying them in a pan with some olive oil and pepper and salt.
Furthermore, three applications were tested: croquet, pasta filling and sausage rolls, which were filled with the barley and corn composition according example 6.
The representatives were asked to score the test samples on a scale of 1 (not good) to 10 (good). The results are given in table 1 below.

**Table 1**

| | **example 5** | | **example 6** | | **vegetarian croquet** | **pasta filling** | **Sausage roll** |
|---|---|---|---|---|---|---|---|
| | **taste** | **texture** | **taste** | **texture** | **appreciation** | **appreciation** | **appreciation** |
| 1 | 7 | 6,5 | 7,5 | 7 | 9 | 7 | 6,5 |
| 2 | 8 | 6 | 7 | 6 | 8 | 7,5 | 7 |
| 3 | 6 | 7 | 8 | 6,5 | 9 | 8 | 6 |
| 4 | 5 | 7 | 6,5 | 7 | 8 | 7 | 6,5 |
| 5 | 7 | 8 | 7 | 7 | 8 | 8,5 | 7 |
| 6 | 6 | 8 | 7 | 7 | 8 | n.d. | 5 |
| 7 | 7 | 7,5 | 7,5 | 7 | 9 | 7 | 6 |
| 8 | 6 | 5 | 5 | 6 | 9 | 9 | 5,5 |
| 9 | 7 | 8 | 6,5 | 7 | 9 | 8,5 | 6,5 |
| 10 | 7 | 8 | 7,5 | 7,5 | 7,5 | 8 | 7 |
| 11 | 5 | 8 | 7 | 7,5 | 8,5 | 9 | 6,5 |
| AV | **6,5** | **7,2** | **7,0** | **6,9** | **8,5** | **8,0** | **7,0** |

## Claims

1. Method for the production of a meat substitute composition based on solid state fermentation, wherein the method comprises the steps of:
(i) providing a substrate having a moisture content of above 50 % (w/w) comprising two different ingredients having a different texture;
(ii) inoculating said substrate with an edible mushroom mycelium; and
(iii) allowing said mycelium to grow in said substrate for a period which is sufficient to saturate the substrate with mycelium to provide the meat substitute composition.

2. Method according to claim 1, wherein the edible mushroom mycelium belongs to the genus *Agaricus* or *Pleurotus.*

3. Method according to claim 1 or 2, wherein step (i) comprises providing a substrate having a moisture content of above 50 % (w/w) comprising a cereal and a plant derived product or a fish derived product, preferably in a weight ratio of more than 3:1.

4. Method according to any of the claims 1 to 3, wherein the substrate comprises shrimp shells, seaweed, algae and/or fish residues.

5. Method according to any of the claims 1 to 4, further comprising sterilizing said substrate before introducing the mycelium, and/or sterilizing the meat substitute composition.

6. Method according to any of the claims 3 to 5, wherein the cereal is chosen from the group consisting of bulgur, wheat, maize, rice, barley, sorghum, oats, rye and buckwheat.

7. Method according to claim 1, wherein the mushroom is chosen from the group consisting of *Agaricus bisporus, A. bitorquis, A. blazei, Auricularia polytricha, Auricularia (Hirneola) auricula-judae, Grifoda frondosa, Cordyceps sinensis, C. japonica, Flammulina vedutipes, Hypsizygus tessulatus, H. marmoreus, Lentinuda edodes, Morchella esculenta, Pleurotus cornucopiae, P. eryngii, P. ostreatus, P. nebrodensis, P. citrinopileatus, Sparassis crispa, Tremella fuciformis, Tuber aestivum, T. magnatum, T. melanosporum, Terfezia sp., Ustilago maydis,* and *Volvariella volvacea.*

8. Meat substitute composition comprising mycelium from an edible mushroom grown through a substrate comprising two different ingredients each having a different texture.

9. Meat substitute composition according to claim 8, wherein the edible mushroom mycelium belongs to the genus *Agaricus* or *Pleurotus.*

10. Meat substitute composition according to claim 8 or 9, wherein said substrate comprises a cereal and a plant derived product, preferably in a weight ratio of more than 3:1.

11. Meat substitute according to any of the claims 8 to 10, wherein the substrate comprises shrimp shells, seaweed, algae and/or fish residues.

12. Meat substitute according to any of the claims 8 to 11, wherein the cereal is chosen from the group consisting of bulgur, wheat, maize, rice, barley, sorghum, oats, rye and buckwheat.

13. Meat substitute according to any of the claims 16 to 23, wherein the substrate comprises wheat grain and peelings from apples or wheat grain and garden peas, or wherein the substrate comprises shrimp residues, kelp and soybeans.

14. Meat substitute composition obtainable by the method according to any of the claims 1 to 7.

15. Use of the meat substitute composition according to any of the claims 8 to 14, for the provision of a consumer product such as a meat hybrid or a vegetarian product, preferably a consumer product chosen from the group consisting of sausage rolls, pasta and croquets
